# EUROPEAN PATENT SPECIFICATION

(11) **EP 2 533 153 B1**
(45) Date of publication and mention of the grant of the patent: **12.09.2018**
(21) Application number: 11169204.2
(22) Date of filing: 08.06.2011
(51) Int. Cl.: H04L 12/24, G06F 11/30, G06F 11/07

(54) **Unit for managing messages indicating event situations of monitored objects**
Einheit zur Verwaltung von Nachrichten mit Ereignissituationen überwachter Objekte
Unité pour la gestion de messages indiquant des situations d'événements d'objets surveillés

(43) Date of publication of application: 12.12.2012
(73) Proprietor: Vodafone Holding GmbH, 40213 Düsseldorf (DE)
(72) Inventor: Klasing, Frank, 48432 Rheine (DE); Fritz, Joachim, 47259 Duisburg (DE)
(74) Representative: CBDL Patentanwälte

(56) References cited:
- WO-A1-2008/091037
- US-A1- 2003 167 406
- US-A1- 2006 136 601
- "HP OEMF: Alarm Management in Telecommunications Networks", INTERNET CITATION, 1 October 1996 (1996-10-01), pages 22-30, XP002491943, Retrieved from the Internet: URL:http://www.hpl.hp.com/hpjournal/pdfs/I ssuePDFs/1996-10.pdf [retrieved on 2008-08-11]

## Description

### FIELD OF THE INVENTION

The invention relates to a combination of a unit for managing messages indicating exceptional event situations with a configuration file, a system with this combination, a computer readable recording medium with this combination and a computer with this computer readable recording medium, as defined in the appended claims.

### BACKGROUND OF THE INVENTION

In event monitoring, monitored objects can be applications, in particular web applications, at least parts of an operating system, active database rules, configured hardware, hardware-software combinations, in particular application servers, as well as human operator inputs. Running or processing such monitored objects provokes events and may provoke exceptional events or event situations, which trigger messages in a monitoring system.

In the field of the invention, the Smart Plug In ("SPI") idea is the base of a specified solution connected to an application monitoring system available under the trade name "HP Open View". A lot of different Smart Plug Ins exists depending on network, database, middleware and application specific environment. For example in a specific network a SPI is a method to establish and enable virtual private networking (VPN) monitoring, thus a SPI is mainly connected to a Network Node Manager as a network monitoring software and thus provides an extended functionality in the network monitoring environment as a very specific solution only useful in network management.

The SPI approach is in all cases always dedicated to a specific product. Hence, a SPI has to be developed individually for each solution which needs a connection to HP Open View. Such SPI developments are individual pieces of software, which can only be used in the context of the target functionality.

Suljai Hajela in "HP OEMF: Alarm Management in Telecommunications Networks", www.hpl.hp.com/hpjournal/96oct/oct96a3.pdf describes a managing unit according to the preamble of claim 1.

This is a high level approach of a framework using a HP Open View Element Management. Indeed this is a base for standardized communication of the HP products. However, most of the descriptions are devoted to network management with an event formatter, event mapper and event correlation and filtering functions. Thus every alarm message needs an event preformatting. The input is thus limited to specific events and formats.

The background of the invention is a more general approach. The invention is not limited to the HP Open View product family, but can be used for other monitoring tools of different vendors as well.

WO 2008/091037 A1 relates to an apparatus and method for converting and monitoring management information data in an integrated manner and in real time and flexibly collecting and converting management information data having a variety of formats and transmitting it to a destination integrated management solution when existing point-specific management solutions are managed in an integrated manner using an integrated management solution.

For application integration according to US 2006/0136601 A1, data is received at a universal adapter, wherein the universal adapter executes as a single process, one or more data transformers to be used to convert the data are identified and the data is converted using the identified one or more data transformers and then routed to one of an application or integration engine.

A system and method for declaring alert indications that occur in an enterprise comprising translating a number of device outputs into a common format event using a number of translation files, and generating a number of knowledge-containing common format events based on matches between the common format events and knowledge base tables of US 2003/0167406 A1 determines a set of rules whether the knowledge base common format events rise to an alert indication for further automated correlation and analysis.

### OBJECT AND SUMMARY OF THE INVENTION

It is an object of the invention to enhance efficiency of installation, adaptation, development and/or maintenance of an error monitoring system, in particular in a computer network or a Data Center environment.

It is an object of the invention to exclude software configuration errors in a computer system having a managing unit according to the preamble of claim 1, while keeping an error monitoring system available for generating messages indicating event situations occurring upon running monitored or processed objects and/or indicating application performance in different formats and/or with different content, wherein the monitored objects are objects monitored by the error monitoring system, in particular web applications, operating system parts, active database rules, configured hardware, hardware-software combinations, in particular application servers, as well as human operator inputs.

With this context, the invention is defined in the claims.

Said rule engine unit has a function of converting said first messages, wherein said first messages have different first formats, into at least one of said second messages having a second format with a selection of or all of
- said parameter values and/or
- transformations of said parameter values.

Prior art systems require a managing unit for each application generating messages in its own application specific format. The invention enables a configurable managing unit, which can accept a variety of messages in different formats from different monitored objects, in particular applications, and can process them in order to create and supply at least one second message to at least one monitoring unit of an object or application performance monitoring system like HP Open View. Under this aspect, the necessity of a plurality of computer programs having a managing unit for managing messages from the monitored objects is avoided, such that software configuration complexity and a source of software configuration errors or incompatibilities are avoided and operating system resources for registering and/or executing and/or storing computer programs can be efficiently used. The managing unit can be implemented as hard or software.

Furthermore, the burden of installing a plurality of computer programs is reduced. Likewise, the burden of identifying a program to be updated among a plurality of programs, each having a managing unit for managing messages from monitored objects, in particular applications, is reduced such that for updating it is only necessary to provide a configuration file with updating functions to the invention's managing unit, which makes the whole process much more efficient.

The rule engine unit may be adapted to replace some of said parameter values with default settings upon executing said function of converting.

The event situations are preferably application performance deficiencies or exception situations in a Data Center environment.

### BRIEF DESCRIPTION OF THE DRAWING

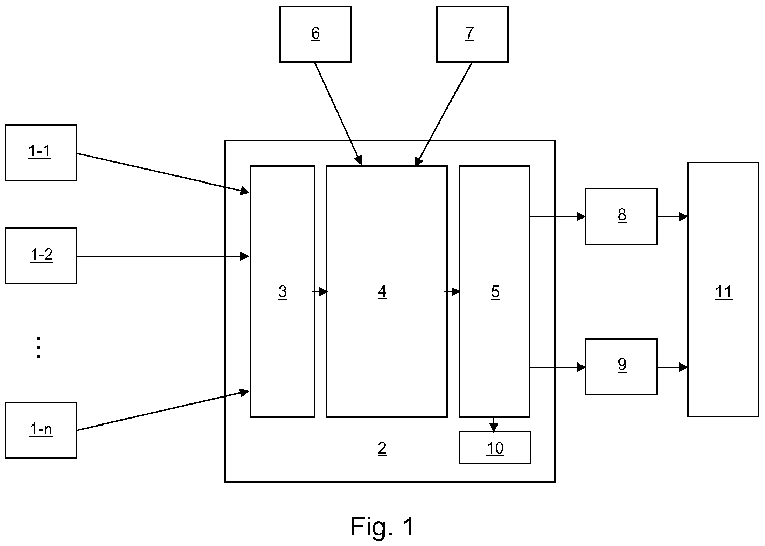

- Fig. 1: shows a managing unit according to the invention in a system having a plurality of applications and a monitoring unit together with second messages, a configuration file and an enrichment data file.

### DESCRIPTION OF PREFERRED EMBODIMENTS

Fig 1 shows a managing unit 2 for managing first messages originating from a plurality of monitored objects, in this example applications 1-1, 1-2, ...1-n and having data indicating performance deficiencies of said applications 1-1, 1-2, ...1-n with sets of parameter values. The unit 2 includes
- an input unit 3 for receiving said first messages,
- a rule engine unit 4
- an output unit 5 for sending a second message to a monitoring unit 11.

The first messages have different application specific formats.

The rule engine unit 4 has a function of converting said first messages into a second message having a second format and a selection of or all of
- said parameter values and/or
- transformations of said parameter values and is specified with a function of identifying a key in at least one of said first messages.

The rule engine unit 4 is also adapted to replace some of said parameter values with default settings upon executing said function of converting.

A history storage unit 10 for receiving and storing the plurality of said second messages in association with times of executing said function of converting is connected to said output unit 5.

The rule engine unit 4 also comprises a routing unit (not shown) for defining for the second message a network destination node in accordance with a routing condition.

A function to enrich the second message with message enrichment data is provided in the rule engine unit 4 as well as a function of parsing a plurality of routing conditions for the network destination node.

The routing unit is adapted to receive the routing condition from said message enrichment data in response to specific parameter values of the first messages.

A configuration file 6 provides data for defining:
- said second format,
- rules for combining said message enrichment data with said parameter values or their transformations,
- a file having said message enrichment data
to said rule engine unit 4 for configuring said function of converting with said data of said configuration file.

A computer readable storage medium stores the managing unit 2 and is provided in a computer network.

In the following, in order to facilitate understanding of the invention, simple examples are given. For instance, a template for the configuration file may be written as follows:

```
 INCLUDE "file"
 [section] # <key> =∼ /<section>/
 name = "value"
 name ?= "value"
```

The managing unit is configurable with a plurality of corresponding configuration files having e.g. the following set of variables:

```
 p_severity p_node p_msgtext p_msggrp
 p_application p_object p_msgkey
 p_organization p_service_time
```

Depending on the requirements of the target system, another set of variables can be used.

Furthermore, the managing unit has the following definitions and remarks:

```
 usage:
 ./EMMA.pl -help
 ./EMMA.pl -key:<key>
               -a:<EMMA|EMMA_ONOFF>
               [-file:<config-file>]
               [-logfile:<log>]
              <name>=<value> ...
              -file configuration file
              -key key of the section
              you can set these variables in the sections of the
              configuration file(s) to create events:
              p_severity severity
              p_node node-name
              p_msgtext message-text
              p_msggrp message-group
              p_application application
              p_object object
              p_organization organization (CMA)
              p_service_time service time (CMA)
              p_msgkey (part of the) message-key
```

According to one embodiment, the managing unit is configured for processing first messages with the following example configuration file content:

```
 # Element Manager Message Adapter (EMMA) Configuration
 # for the "weather" application
 #
 # Examples:
 # EMMA.pl "-key:rainy,Ratingen" "-file:weather.cfg"
 # "-a-:EMMA_ONOFF" "city=Ratingen"
 # "msg=It is raining"
 #
 # EMMA.pl "-key:HEARTBEAT" "-file:weather.cfg" "-a:EMMA"
 # "city=Ratingen"
 #
 #----------#
 # Sections #
 #----------#
 [HEARTBEAT]
 p_severity = normal
 p_msgtext = "KEEPALIVE: heartbeat from <city>"
 p_application = weather-heartbeat
 [stormy,.*]
 p_severity = critical
 p_msgtext = "storm in <city> detected: <msg>"
 [rainy,.*]
 p_severity = minor
 p_msgtext = "rain in <city> detected: <msg>"
 [sunny,.*]
 p_severity = normal
 p_msgtext = "sunshine in <city> detected: <msg>"
 [.*,Ratingen] p_msggrp = app_frog-de
 [.*,Milan] p_msggrp = app_frog-it
 [.*,Dublin] p_msggrp = app_frog-ie
 # Format of Maintenance file:
 # [section] p_service_time - "maintenance"
 # Example:
 # [.*,Ratingen] p_service_time = "maintenance"
 INCLUDE "/usr/local/weather/status_maintenance.cfg"
 #----------#
 # Defaults #
 #----------#
 # if some variables are not set
 [_DEFAULT_]
 city ?= unknown
 msg ?= unknown
 p_severity ?= Warning
 p_node ?= <city>
 p_msggrp ?= app_frog
 p_msgtext ?= "The weather in <city>: <msg> (<_KEY_>)"
 p_application ?= weather
 p_object ?= weather-emma
 P_msgkey ?= <city>
```

Definitions for the content of the second message may be made by the managing unit according to the following listings opcmsg1 and opcmsg2.

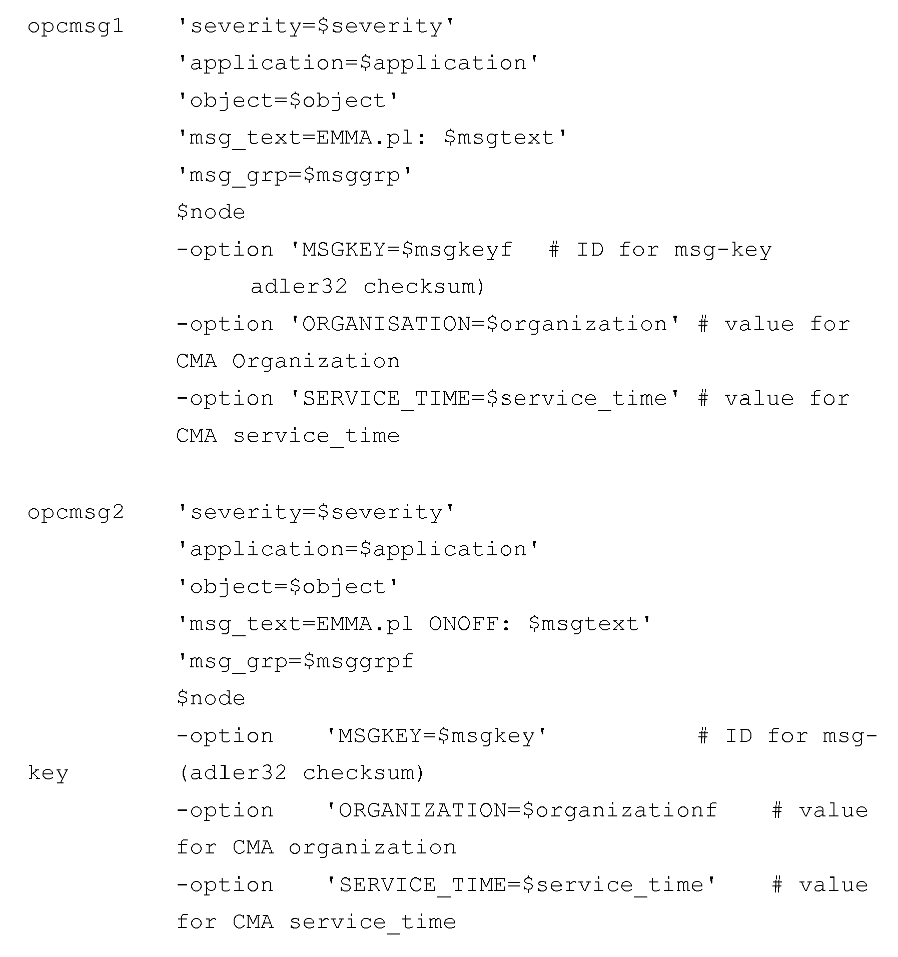

These messages may be provided as an e-mail message 8 or as a log-file 9 to the monitoring unit 11.

For the above mentioned variables default values may be defined in the configuration file used in accordance with table 1.

**Table 1: variables defined in the EMMA configuration file:**

| Variable | Description | Default value (if variable is not set) |
|---|---|---|
| p_severity | event-severity (critical, major, minor, warning, normal | "warning" |
| p_node | node name | name of the local agent |
| p_msgtext | message-text | "No message defined in interface EMMA" |
| p_msggrp | responsible message-group | "montool" |
| p_application | "application" event-attribute | "ovo-montool" |
| p_object | "object" event-attribute | "script_emma" |
| p_msgkey | part of the message-key | complete message-text |
| p_organization | the CMA event-attribute "organization" | message-enrichment sets this value |
| p_service_time | the CMA event-attribute "service_time" | message-enrichment sets this value |

Enrichment data are provided to the managing unit from a file 7 to define routing of the second messages to specific computers assigned to specific service staff responsible for servicing the respective applications for which the second messages have performance information. Furthermore, the second messages are used to:
- add a link data and instrumentation dictionary of an application to ("exps_datainstrumentation" directory),
- add a log rotation entry for to specify a log file 8 with application performance information.

This file 7 may include the following listings cl40 logrotate.lst and c500 links.

```
 cl40 logrotate.lst
 #
 # Logrotation EMMA
 #
 CONDITION "EMMA" : "{$tgrp_TEMPL_GROUP_NAME}" =∼
 "^.*<infrane_emma>.*$" = "TRUE"
 >EXEC LOGROTATE_NAME () (10000)
                      "$[OvInstrumentationDir]/EMMA.log"
                      "$[OvInstrumentationDir]/EMMA.log.1"
                      ENDCONDITION "EMMA"
                      c500 links
                      # Links to EMMA 1f assigned to TemplateGroup "infrane_emma"
                      CONDITION "EMMA" : " {$tgrp_TEMPL_GROUP_NAME}" =∼
                      "^.*<infrane emma>.*$" = "TRUE"
                      LINK "{$global_WORKDIR}/repository/infra/emma/EMMA.pl"
                      TO "{$global_NODEDIR}/exps_datainstrumentation/EMMA.pl"
                      ENDCONDITION "EMMA"
```

For these routing functions, the managing unit upon creating second message processes the second message with the following operations:
- assign the node to a second message content and/or format
- reparse conditions of this node
- create a configuration file
- create a link to the configuration file
- send a configured second message as a file to the node

In addition, a system with the managing unit is provided with functions to
- check if subagent processes of the managing unit are running
- check if it is possible to create a second message with a test message:
- check if a specified configuration file is distributed to the managing unit 2
- parse performance information in second messages, in particular parse error information.

As illustrated above, according to an exemplary and non-limiting embodiment of the invention, the managing unit is provided with a configuration file for a weather forecast application, which sends a first message, with enrichment data specifying a responsible team for this application and with active routing information for the second message.

According to a further aspect, one of the applications is a virtual server and a configuration file for this application is provided and the enrichment data have system maintenance information for the virtual server, administration software known under the trade name "VCenter".

According to another aspect, an application is a workload scheduler like that available under the trademark "TIVOLI workload scheduler TWS2OVO" and the configuration file for this application is provided and the enrichment data define responsible teams for this application and service information for this application.

### REFERENCE SIGNS

- 1-1, 1-2, ..., 1-n: monitored objects (applications)
- 2: managing unit
- 3: input unit
- 4: rule engine unit
- 5: output unit
- 6: configuration file
- 7: message enrichment data
- 8: log file
- 9: message
- 10: history storage unit
- 11: monitoring unit

## Claims

1. A combination of a managing unit (2) for managing first messages originating from a plurality of monitored objects (1-1, 1-2, ...1-n), said first messages having data indicating with sets of parameter values event situations of said monitored objects (1-1, 1-2, ...1-n), and a configuration file (6), said managing unit (2) comprising:
- an input unit (3) for receiving said first messages,
- an output unit (5) for sending at least one second message to at least one monitoring unit (11) and
- a rule engine unit (4),
- said rule engine unit (4) having a function of converting said first messages, wherein said first messages have different first formats, into at least one of said second messages having a second format with a selection of or all of
-- said parameter values and/or
-- transformations of said parameter values,
- said event situations being exception situations in a data centre environment,
- said rule engine unit (4) comprising
-- a routing unit for defining for said second messages network destination nodes in accordance with routing conditions,
-- a function to enrich at least one of said second messages with message enrichment data, and
wherein said routing unit is adapted to receive said routing conditions from said message enrichment data in response to specific parameter values of a first message among said first messages, and
- said rule engine unit (4) comprises a function of parsing a plurality of said routing conditions for each of a network node among said network destination nodes, and
- said configuration file (6) has data for defining at least one of:
-- said second format,
-- rules for combining said message enrichment data with said parameter values or their transformations, and
-- a file having said message enrichment data, and
wherein said rule engine unit (4) is adapted to receive said configuration file (6) and is adapted to configure said function of converting with said data of said configuration file.

2. A combination according to claim 1, **characterized in that** said rule engine unit (4) is adapted to replace some of said variables with default settings upon executing said function of converting.

3. A combination according to claim 1 or 2, **characterized in that** said function of converting includes a function of identifying a key in at least one of said first messages and specifying with said key said second format.

4. A combination according to any of the preceding claims, **characterized in** comprising a history storage unit (10) for receiving and storing the plurality of said second messages in association with times of executing said function of converting.

5. A system comprising a plurality of monitored objects (1-1, 1-2, ...1-n), a monitoring unit (11) and a combination according to any of claims 1 to 4.

6. A computer readable storage medium storing a combination according to any of claims 1 to 4.

7. A computer comprising a central processing unit, a network interface, a memory buffer and a computer readable storage medium according to claim 6.

## Patentansprüche

1. Kombination aus einer Handhabungseinheit (2) zum Handhaben erster Nachrichten, die von mehreren überwachten Objekten (1-1, 1-2, ...1-n) stammen, wobei die ersten Nachrichten Daten, die mit Sätzen von Parameterwerten Ereignissituationen der überwachten Objekte (1-1, 1-2, ...1-n) anzeigen, und eine Konfigurationsdatei (6) besitzen, wobei die Handhabungseinheit (2) umfasst:
- eine Eingabeeinheit (3) zum Empfangen der ersten Nachrichten,
- eine Ausgabeeinheit (5) zum Senden mindestens einer zweiten Nachricht zu mindestens einer Überwachungseinheit (11), und
- eine Regel-Erzeugungseinheit (4),
- wobei die Regel-Erzeugungseinheit (4) eine Funktion des Umwandelns der ersten Nachrichten, wobei die ersten Nachrichten verschiedene erste Formate haben, in mindestens eine der zweiten Nachrichten besitzt, die ein zweites Format mit einigen oder allen der
-- Parameterwerte und/oder
-- Transformationen der Parameterwerte
haben,
- wobei die Ereignissituationen Ausnahmesituationen in einer Datenzentrum-Umgebung sind,
- wobei die Regel-Erzeugungseinheit (4) umfasst:
-- eine Routingeinheit, um für die zweiten Nachrichten Netzbestimmungsknoten gemäß Routingbedingungen zu definieren,
-- eine Funktion, um mindestens eine der zweiten Nachrichten mit Nachrichtenanreicherungsdaten anzureichern, und
wobei die Routingeinheit dafür ausgelegt ist, die Routingbedingungen von den Nachrichtenanreicherungsdaten in Reaktion auf spezifische Parameterwerte einer ersten Nachricht unter den ersten Nachrichten zu empfangen, und
- die Regel-Erzeugungseinheit (4) eine Funktion zum Parsen mehrerer Routingbedingungen für jeden eines Netzknotens unter den Netzbestimmungsknoten umfasst, und
- die Konfigurationsdatei (6) Daten besitzt zum Definieren mindestens eines von:
-- dem zweiten Format,
-- Regeln zum Kombinieren der Nachrichtenanreicherungsdaten mit den Parameterwerten oder ihren Transformationen, und
-- einer Datei, die die Nachrichtenanreicherungsdaten aufweist, und
wobei die Regel-Erzeugungseinheit (4) dafür ausgelegt ist, die Konfigurationsdatei (6) zu empfangen, und dafür ausgelegt ist, die Funktion des Umwandelns mit den Daten der Konfigurationsdatei zu konfigurieren.

2. Kombination nach Anspruch 1, **dadurch gekennzeichnet, dass** die Regel-Erzeugungseinheit (4) dafür ausgelegt ist, einige der Variablen durch Standardvorgabe-Einstellungen beim Ausführen der Funktion des Umwandelns zu ersetzen.

3. Kombination nach Anspruch 1 oder 2, **dadurch gekennzeichnet, dass** die Funktion des Umwandelns eine Funktion des Identifizierens eines Schlüssels in mindestens einer der ersten Nachrichten und des Spezifizierens des zweiten Formats mit dem Schlüssel enthält.

4. Kombination nach einem der vorangehenden Ansprüche, **dadurch gekennzeichnet**, das sie eine Verlaufsspeichereinheit (10) zum Empfangen und Speichern der mehreren der zweiten Nachrichten in Verbindung mit Zeiten der Ausführung der Funktion des Umwandelns umfasst.

5. System, das mehrere überwachte Objekten (1-1, 1-2, ...1-n), eine Überwachungseinheit (11) und eine Kombination nach einem der Ansprüche 1 bis 4 umfasst.

6. Computerlesbares Speichermedium, das eine Kombination nach einem der Ansprüche 1 bis 4 speichert.

7. Computer, der eine zentrale Verarbeitungseinheit, eine Netzwerkschnittstelle, eine Speicherpuffer und ein computerlesbares Speichermedium nach Anspruch 6 umfasst.

## Revendications

1. Combinaison d'une unité de gestion (2) pour gérer des premiers messages provenant d'une pluralité d'objets surveillés (1-1, 1-2, ... 1-n), lesdits premiers messages ayant des données indiquant, avec des ensembles de valeurs de paramètres, des situations d'événement des objets surveillés (1-1, 1-2, ... 1-n), ainsi qu'un fichier de configuration (6), ladite unité de gestion (2) comprenant:
- une unité d'entrée (3) pour recevoir lesdits premiers messages,
- une unité de sortie (5) pour envoyer au moins un deuxième message à au moins une unité de surveillance (11), et
- une unité de moteur de règles (4),
- ladite unité de moteur de règles (4) ayant une fonction de conversion desdits premiers messages, lesdits premiers messages ayant des premiers formats différents, en au moins l'un desdits deuxièmes messages ayant un deuxième format avec quelques-unes des ou de toutes lesdites
-- valeurs de paramètres et/ou
-- transformations desdites valeurs de paramètres,
- les situations d'événement étant des situations d'exception dans un environnement de centre de données,
- ladite unité de moteur de règles (4) comprenant:
-- une unité de routage pour définir pour lesdits deuxièmes messages des noeuds de destination de réseau conformément à des conditions de routage,
-- une fonction pour enrichir au moins l'un desdits deuxièmes messages de données d'enrichissement de message, et
dans laquelle ladite unité de routage est adaptée pour recevoir lesdites conditions de routage à partir desdites données d'enrichissement de message en réponse à des valeurs de paramètres spécifiques d'un premier message parmi lesdits premiers messages, et
- ladite unité de moteur de règles (4) comprend une fonction d'analyse syntaxique d'une pluralité desdites conditions de routage pour chacun d'un noeud de réseau parmi lesdits noeuds de destination de réseau, et
- ledit fichier de configuration (6) possède des données pour définir au moins l'un parmi:
-- ledit deuxième format,
-- des règles pour combiner lesdites données d'enrichissement de message avec lesdites valeurs de paramètres ou leurs transformations, et
-- un fichier comprenant lesdites données d'enrichissement de message, et
dans laquelle ladite unité de moteur de règles (4) est adaptée pour recevoir ledit fichier de configuration (6) et est adaptée pour configurer ladite fonction de conversion avec lesdites données du fichier de configuration.

2. Combinaison selon la revendication 1, **caractérisée en ce que** ladite unité de moteur de règles (4) est adaptée pour remplacer quelques-unes des variables par des réglages par défaut lors de l'exécution de la fonction de conversion.

3. Combinaison selon la revendication 1 ou 2, **caractérisée en ce que** ladite fonction de conversion comprend une fonction d'identification d'une clé dans au moins un desdits premiers messages, et de spécification du deuxième format avec ladite clé.

4. Combinaison selon l'une quelconque des revendications précédentes, **caractérisée en ce qu'**elle comprend une unité de stockage d'historique (10) pour recevoir et stocker la pluralité des deuxièmes messages en association avec des temps d'exécution de ladite fonction de conversion.

5. Système comprenant une pluralité d'objets surveillés (1-1, 1-2, ...1-n), une unité de surveillance (11) et une combinaison selon l'une quelconque des revendications 1 à 4

6. Support de stockage lisible par ordinateur et stockant une combinaison selon l'une quelconque des revendications 1 à 4.

7. Ordinateur comprenant une unité de traitement centrale, une interface de réseau, un tampon de mémoire et un support de stockage lisible par ordinateur selon la revendication 6.
